# EUROPÄISCHE PATENTSCHRIFT

(11) **EP 1 797 459 B1**
(45) Veröffentlichungstag und Bekanntmachung des Hinweises auf die Patenterteilung: **20.11.2013**
(21) Anmeldenummer: 05789528.6
(22) Anmeldetag: 27.09.2005
(51) Int. Cl.: G01S 17/93

(54) **INFRAROTSENSOR ZUR PARKLÜCKENVERMESSUNG UND UMFELDÜBERWACHUNG FÜR EIN FAHRZEUG**
INFRA-RED SENSOR FOR PARKING GAP MEASUREMENT AND ENVIRONMENT MONITORING FOR A VEHICLE
CAPTEUR INFRAROUGE DE MESURE DE PLACE DE STATIONNEMENT ET DE SURVEILLANCE DE CHAMP POUR UN VEHICULE

(30) Priorität: 28.09.2004 DE 102004046938; 26.09.2005 DE 102005046000
(43) Veröffentlichungstag der Anmeldung: 20.06.2007
(73) Patentinhaber: Continental Teves AG & Co. oHG, 60488 Frankfurt am Main (DE)
(72) Erfinder: HALASY-WIMMER, Georg, 71706 Markgröningen (DE); LUEKE, Stefan, 57462 Olpe (DE)
(74) Vertreter: Bobbert, Christiana
(86) Internationale Anmeldenummer: PCT/EP2005/054824
(87) Internationale Veröffentlichungsnummer: WO 2006/035019

(56) Entgegenhaltungen:
- EP-A- 0 305 907
- EP-A- 0 899 583
- EP-A- 0 936 471
- EP-A- 1 467 225
- DE-B3- 10 349 755
- GB-A- 2 131 642
- US-A1- 2002 169 537
- US-A1- 2004 040 764
- US-B1- 6 343 810

## Beschreibung

Vorrichtung zum Erfassen eines seitlichen Umfelds eines Fahrzeugs mit einem seitlich an dem Fahrzeug angeordneten Sensor, der eine Sendeeinheit zum Aussenden elektromagnetischer Strahlung in einen Beobachtungsraum und eine Empfangseinheit zum Empfangen von in dem Beobachtungsraum an einem Objekt reflektierter elektromagnetischer Strahlung aufweist, wobei mittels der Empfangseinheit bei einem Empfang reflektierter elektromagnetischer Strahlung Erfassungssignale erzeugbar sind.

Derartige Sensoren werden in Fahrzeugen zu einer Vielzahl von Zwecken verwendet. So ist es beispielsweise bekannt, Umfeldsensoren zur Überwachung des so genannten toten Winkels des Fahrzeugs einzusetzen und den Fahrer zu warnen, wenn sich ein Objekt innerhalb des toten Winkels befindet. Ferner sind so genannte Pre-Crash-Sensoren bekannt, welche eine Kollision zwischen dem Fahrzeug und einem Objekt bereits vor einem Aufprall des Objekts erkennen und geeignete Sicherheitsmittel, wie etwa Airbags oder Gurtstraffer, auslösen.

Insbesondere ist aus der deutschen Offenlegungsschrift DE 103 31 074 A1 eine als Pre-Crash-Sensor nutzbare Sensoran ordnung zur Abstands- und Geschwindigkeitsmessung bekannt, die als Infrarot-Sensor ausgeführt ist und über mehrere Empfangsdioden verfügt, die jeweils im Fokussierpunkt einer Linse angeordnet sind und Licht aus einem Segment des Beobachtungsraums erfassen. Die Unterteilung des Beobachtungsraums in mehrere Segmente ist dabei vorgesehen, um einen größeren Umfeldbereich abzudecken, als dies mit nur einem Segment möglich wäre.

Ein weiteres Einsatzgebiet für Sensoren der eingangs genannten Art sind so genannte Einparkhilfen, die eine für das Fahrzeug geeignete Parklücke automatisch identifizieren und das Fahrzeug teilweise auch entweder automatisch in die Parklücke rangieren oder den Fahrer durch Lenkempfehlungen beim Einparken unterstützen.

Die Vermessung bzw. Identifizierung einer Parklücke kann dabei erfolgen, indem während des Vorbeifahrens an einer Parklücke der seitliche Abstand zu Objekten mittels des Sensors ermittelt wird. Die Parklücke wird dabei als der Bereich identifiziert, in dem der Abstand zwischen dem Fahrzeug und seitlichen Objekten größer ist als in weiteren Bereichen, in denen die Objekte, wie etwa andere Fahrzeuge, angeordnet sind, welche die Parklücke begrenzen. Anhand der Signale von Raddrehzahlsensoren des Fahrzeugs kann dabei die während des Passierens des Bereichs mit dem größeren Abstand zu den seitlich von dem Fahrzeug befindlichen Objekten zurückgelegte Wegstrecke und damit die Länge der Parklücke ermittelt werden.

Die verschiedenen dargestellten Einsatzgebiete stellen unterschiedliche Anforderungen an die verwendeten Sensoren. So wird zur Umfeldüberwachung vorzugsweise ein Sensor mit einem großen Erfassungswinkel eingesetzt, mit dem jedoch eine genaue Vermessung einer Parklücke nicht oder nur sehr ungenau möglich ist, da bei einem großen Erfassungswinkel die Position der Parklückenbegrenzung nur sehr ungenau ermittelbar ist.

Dabei ist es jedoch wirtschaftlich sehr nachteilig, mehrere Sensoren für die verschiedenen dargestellten Zwecke in einem Fahrzeug vorzugehen, Ferner sind Sensoren in der Regel in Anbauelemente wie beispielsweise Außenspiegel oder Leuchten des Fahrzeugs integriert, um das äußere Erscheinungsbild des Fahrzeugs nicht zu beeinträchtigen. Da jedoch im Seitenbereich des Fahrzeugs in der Regel wenige Anbauelemente zur Verfügung stehen, ist es oftmals nicht möglich, mehrere Sensoren unauffällig im Seitenbereich eines Fahrzeugs anzuordnen.

US 2004/040764 A1 offenbart ein Fahrerassistenzsystem, das wenigstens zwei Sende- und Empfangselemente für elektromagnetische Strahlung aufweist. Die Sende- und Empfangselemente sind hierbei auf einem Substrat angeordnet, das eine zu einem Sichtfeld korrespondierende Krümmung aufweist.

US-B1-6 343 810 beschreibt ein Airbag-System mit einem in der Seitentür eines Kraftfahrzeugs angeordneten Airbag und einem Sensor zur vorausschauenden Erkennung eines Seitenaufpralls. Der Sensor empfängt hierzu von einem Aufprallobjekt erzeugte, modifizierte oder reflektierte Wellen und identifiziert das Aufprallobjekt anhand des empfangenen Wellenmusters.

GB-A-2 131 642 beschreibt eine Hinderniserkennung und Einparkhilfe mit Sendeund Empfangseinheiten, die jeweils mehrere Sende- bzw. Empfangselemente umfassen und an den hinteren Ecken eines Fahrzeugs angeordnet sind.

US2002/169537A1 beschreibt eine hochauflösende 3D-Erfassungseinrichtung für ein Fahrzeug, mit dem ein zweidimensionales Entfernungsprofil erzeugt werden kann. Ein Datenprozessor berechnet aus mehreren aufeinanderfolgenden zweidimensionalen Entfernungsprofilen ein dreidimensionales Abbild eines Beobachtungsraums.

EP-A-0 936 471 bezieht sich auf ein Fahrzeug mit einer Einrichtung zur Erfassung von Objekten in einem Beobachtungsbereich vorgegebener Horizontalerstreckung, wobei die Objekterfassungseinrichtung Mittel zur strahlungsbasierten Abtastung des Beobachtungsbereichs und eine diesen nachgeschaltete Auswerteeinheit aufweist.

DE 103 46 755 B3 bezieht sich auf einen Sensor an einem Kraftfahrzeug mit einem im Wesentlichen quer zur Fahrzeuglängsachse ausgerichteten Erfassungsbereich, wobei der Sensor um eine Querachse des Kraftfahrzeuges drehbar gelagert ist. Mit nur einem Sensor sind damit je nach Ausrichtung oder Drehlage des Sensors um seine Querachse unterschiedliche seitliche Bereiche erfassbar und auf Hindernisse abtastbar.

Es ist daher eine Aufgabe der Erfindung, eine Vorrichtung der eingangs genannten Art zu schaffen, die sich sowohl zur Erfassung eines möglichst großen Umfeldbereichs des Fahrzeugs, als auch für eine möglichst genaue Bestimmung der Begrenzung einer Parklücke eignet.

Erfindungsgemäß wird diese Aufgabe durch eine Vorrichtung mit den Merkmalen des Anspruchs 1 gelöst.

Demgemäß ist es vorgesehen, dass eine Vorrichtung der eingangs genannten Art so ausgestaltet ist, dass der Beobachtungsraum wenigstens zwei Erfassungsbereiche umfasst, wobei ein erster Erfassungsbereich im Wesentlichen quer zur Fahrzeuglängsachse ausgerichtet ist und einen ersten öffnungswinkel aufweist und wobei der zweite Erfassungsbereich einen zweiten öffnungswinkel aufweist, der größer als der erste öffnungswinkel ist, dass dem ersten Erfassungsbereich zuordenbare Erfassungssignale der Empfangseinheit einer Einparkhilfeeinrichtung zuführbar sind, wobei mittels der Einparkhilfeeinrichtung bei einer Vorbeifahrt des Fahrzeugs an einer Parklücke die Parklücke vermessbar ist, und dass dem zweiten Erfassungsbereich zuordenbare Erfassungssignale einer Umfeldüberwachungseinrichtung zuführbar sind.

Damit wird eine Vorrichtung geschaffen, die einen Sensor mit mehreren Erfassungsbereichen aufweist, wobei den unterschiedlichen Erfassungsbereichen zugeordnete Erfassungssignale, welche mittels der Empfangseinheit erzeugt werden und die das Vorhandensein eines Objekts in einem der Erfassungsbereiche sowie zweckmäßigerweise dessen Abstand zu dem Fahrzeug angeben, jeweils einer Einparkhilfeeinrichtung und einer Umfeldüberwachungseinrichtung eines Fahrzeugs zuführbar sind.

Der Erfassungsbereich, welcher der Einparkhilfeeinrichtung zugeordnet ist, weist dabei vorteilhaft einen schmaleren Öffnungswinkel auf und ist im Wesentlichen senkrecht zur Fahrzeuglängsachse ausgerichtet, so dass Begrenzungen der Parklücke bei einer Vorbeifahrt des Fahrzeugs genau erfasst und deren Position bestimmt werden.

Unter einem im Wesentlichen quer zur Fahrzeuglängsachse ausgerichteten Erfassungsbereich ist dabei insbesondere ein Erfassungskegel bzw. eine Erfassungskeule des Sensors zu verstehen, deren Mittellängsachse senkrecht zur Fahrzeuglängsachse ausgerichtet ist. Diese Ausrichtung des ersten Erfassungsbereichs trägt ebenfalls dazu bei, dass die Begrenzungen einer Parklücke genau erfasst werden können.

Ein zweiter Erfassungsbereich ist einer Umfeldüberwachungseinrichtung zugeordnet, wobei dieser Erfassungsbereich einen größeren Öffnungswinkel aufweist, so dass ein größerer Bereich des seitlichen Umfelds des Fahrzeugs überwacht werden kann.

Nach der Erfindung ist es vorgesehen, dass der erste Erfassungsbereich ein erstes Segment des Beobachtungsraums umfasst und dass der zweite Erfassungsbereich das erste Segment des Beobachtungsraums und wenigstens ein das erste Segment überlappendes weiteres Segment des Beobachtungsraums umfasst.

Dies hat den Vorteil, dass der erste Erfassungsbereich insbesondere auch zur Umfeldüberwachung verwendet werden kann.

Dabei ist nach der Erfindung vorgesehen, dass das weitere Segment des Beobachtungsraums einen größeren Öffnungswinkel aufweist als das erste Segment des Beobachtungsraums.

Vorzugsweise ist es zudem vorgesehen, dass der der zweite Erfassungsbereich den gesamten Beobachtungsraum umfasst.

In einer bevorzugten Ausgestaltung der Erfindung ist es vorgesehen, dass die Empfangseinheit wenigstens zwei Fokussierpunkte aufweist, wobei in jedem Fokussierpunkt mittels einer Linse reflektierte elektromagnetische Strahlung fokussiert wird, die aus einem der Segmente des Beobachtungsraums empfangen wird.

Zweckmäßigerweise ist dabei in dem Fokussierpunkt ein Empfangselement angeordnet, mittels welchem Erfassungssignale erzeugbar sind, die dem Segment des Beobachtungsraums zuordenbar sind, aus dem die reflektierte Strahlung von der Empfangsdiode erfassbar ist.

In einer ebenfalls vorteilhaften Ausführungsform der Erfindung ist es vorgesehen, dass die Sendeeinheit wenigstens zwei Sendeelemente aufweist, welche elektromagnetische Strahlungspulse zu vorgegebenen verschiedenen Zeitpunkten in jeweils ein Segment des Beobachtungsraums aussenden.

Vorzugsweise ist die in der Empfangseinheit empfangene reflektierte Strahlung dabei anhand eines Empfangszeitpunktes einem Segment des Beobachtungsraums zuordenbar.

In einer zweckmäßigen Ausführungsform der Erfindung ist es dabei vorgesehen, dass reflektierte Strahlung, die innerhalb eines Zeitintervalls in der Empfangseinheit empfangen wird, das zu einem Zeitpunkt beginnt, zu dem ein Sendeelement Strahlung in ein Segment des Beobachtungsraums aussendet, diesem Segment des Beobachtungsraums zugeordnet wird.

Vorteilhaft ist es dabei vorgesehen, dass das Zeitintervall zu einem Zeitpunkt endet, zu dem ein weiteres Sendeelement einen Strahlungspuls in ein Segment des Beobachtungsraums aussendet.

Anhand der Zuordnung der Empfangssignale zu einem Segment des Beobachtungsraums erfolgt dann zweckmäßigerweise die Zuordnung der Erfassungssignale zu dem dieses Segment umfassenden Erfassungsbereich.

In einer bevorzugten Ausführungsform der Erfindung ist es vorgesehen, dass die Umfeldüberwachungseinrichtung überprüft, ob sich ein in dem zweiten Erfassungsbereich befindliches Objekt auf einem Kollisionskurs mit dem Fahrzeug befindet und wenigstens ein Insassenschutzmittel ansteuert, wenn festgestellt wird, dass sich das Objekt auf einem Kollisionskurs mit dem Fahrzeug befindet.

Eine vorteilhafte Ausgestaltung der Erfindung sieht dabei vor, dass die Umfeldüberwachungseinrichtung einen Seitenairbag auslöst, wenn festgestellt wird, dass sich ein Objekt auf einem Kollisionskurs mit dem Fahrzeug befindet.

Eine weitere vorteilhafte Ausgestaltung der Erfindung sieht vor, dass die Umfeldüberwachungseinrichtung ein reversibles Insassenschutzmittel ansteuert, wenn festgestellt wird, dass sich ein Objekt auf einem Kollisionskurs mit dem Fahrzeug befindet.

Nach der Erfindung ist es vorgesehen, dass der zweite Erfassungsbereich einen toten Winkel des Fahrzeugs umfasst.

Dadurch ist es möglich, beispielsweise während eines Spurwechsels das Vorhandensein eines Fahrzeugs in dem durch den Fahrer nur schwer einsehbaren toten Winkel des Fahrzeugs zu erfassen.

Vorzugsweise ist es dabei vorgesehen, dass die Umfeldüberwachungseinrichtung ein Warnsignal aktiviert, wenn ein Objekt innerhalb des toten Winkels erfasst wird.

In einer weiteren bevorzugten Ausgestaltung der Erfindung ist es weiterhin vorgesehen, dass aus den Erfassungssignalen ein Abstand zwischen dem Fahrzeug und einem seitlich von dem Fahrzeug befindlichen Objekt ermittelbar ist und dass in der Einparkhilfeeinrichtung eine Parklückenbegrenzung anhand einer Veränderung des Abstands zwischen dem Fahrzeug und seitlich von dem Fahrzeug befindlichen Objekten ermittelbar ist.

Vorzugsweise ist es dabei vorgesehen, dass in der Einparkhilfeeinrichtung ein bei der Vorbeifahrt von dem Fahrzeug seitlich passierter Bereich als Parklücke identifizierbar ist, in dem der Abstand zwischen dem Fahrzeug und seitlich von dem Fahrzeug befindlichen Objekten größer ist als in einem weiteren Bereich.

Weitere Vorteile, Besonderheiten und zweckmäßige Weiterbildungen der Erfindung ergeben sich aus den Unteransprüchen und der nachfolgenden Darstellung bevorzugter Ausführungsbeispiele der Erfindung anhand der Figur.

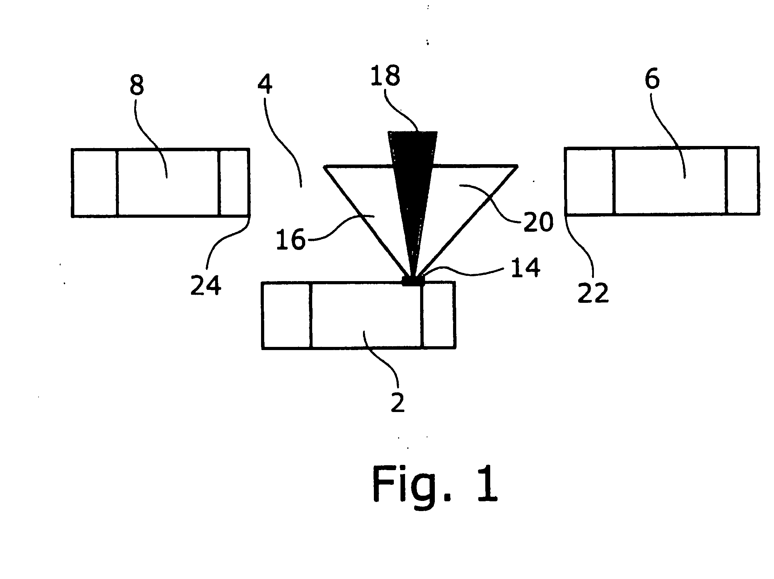

Die Figur 1 zeigt eine schematische Darstellung eines Fahrzeugs mit einem seitlichen Abstandssensor, der verschiedene Erfassungsbereiche aufweist.

Die Figur 1 zeigt in schematischer Darstellung insbesondere ein Fahrzeug 2, welches seitlich neben einer Parklücke 4 angeordnet ist, die in der beispielhaft in der Figur dargestellten Situation von weiteren Fahrzeugen 6, 8 bzw. deren Fahrzeugseitenwänden 10, 12 begrenzt wird.

Das Fahrzeug 2 verfügt dabei über eine Einparkhilfeeinrichtung, welche den Fahrer beim Einparken des Fahrzeugs 2 in die Parklücke 4 unterstützt, sowie über eine Umfeldüberwachungseinrichtung, welche das seitliche Umfeld des Fahrzeugs überwacht und dabei insbesondere Objekte ermittelt, die sich auf einem Kollisionskurs mit dem Fahrzeug befinden.

Sowohl die Einparkhilfeeinrichtung als auch die Umfeldüberwachungseinrichtung nutzen wenigstens einen Abstandssensor 14, der seitlich an dem Fahrzeug 2, beispielsweise im Bereich eines vorderen oder hinteren Kotflügels oder an der B-Säule des Fahrzeugs 2 angeordnet ist. Vorzugsweise ist jedoch jeweils ein Abstandssensor 14 auf jeder der beiden Seiten des Fahrzeugs 2 angeordnet.

Vorzugsweise ist der Abstandssensor 14 als ein optischer Sensor ausgeführt. Er verfügt dabei über eine Sendeeinheit, welche elektromagnetische Strahlungspulse einer vorgegebenen festen Frequenz in einen Beobachtungsraum aussendet, sowie über eine Empfangseinheit, welche Strahlung erfasst, die in dem Beobachtungsraum an einem Objekt reflektiert worden ist. Aus der Laufzeit der reflektierten Signale kann dabei in einer dem Fachmann bekannten Weise der Abstand zwischen den Objekten und dem Fahrzeug 2 bzw. dem Abstandssensor 14 ermittelt werden.

Wie in Figur 1 schematisch dargestellt, weist der Beobachtungsraum des Abstandssensors 14 dabei mehrere Segmente 16, 18, 22 auf. Das mittlere Segment 18 weist einen schmalen Öffnungswinkel auf und ist im Wesentlichen quer zur Längsachse des Fahrzeugs 2 ausgerichtet. Das Segment 18 entspricht dabei dem Erfassungsbereich des Abstandsensors 14, welcher von der Einparkhilfeeinrichtung zur Vermessung der Parklücke 4 genutzt wird. Der gesamte Beobachtungsraum des Abstandssensors 14, der sich aus dem mittleren Segment 18, welches eine schmalen Öffnungswinkel aufweist, sowie aus den beiden das mittlere Segment 18 überlappenden Segmenten 16, 20, welche vorzugsweise jeweils einen großen Öffnungswinkel aufweisen, zusammensetzt, entspricht dem Erfassungsbereich, welcher der Umfeldüberwachungseinrichtung zugeordnet ist.

In einer Ausführungsform der Erfindung ist der Abstandssensor 14 dabei als Infrarot-Sensor ausgeführt, dessen Sendeeinheit als eine gepulst arbeitende Laserdiode ausgebildet ist, die Licht einer vorgegebenen festen Frequenz im infraroten Spektralbereich über eine Linse in den gesamten Beobachtungsraum aussendet.

Die Empfangseinheit des Abstandssensors 14 verfügt in dieser Ausführungsform der Erfindung über mehrere Empfangselemente, bei denen es sich beispielsweise um PIN-Dioden handelt, mit denen in dem Fachmann bekannter Weise das in dem Beobachtungsraum an einem Objekt reflektierte Licht erfasst wird.

Die Empfangselemente sind dabei jeweils in einem Fokussierpunkt einer Linse angeordnet, so dass sie jeweils nur das reflektierte Licht erfassen, welches von der zugeordneten Linse fokussiert wird. Die Linsen sind dabei so ausgebildet und angeordnet, dass sich Empfangskeulen ausbilden, welche den zuvor beschriebenen Segmenten 16, 18, 20 des Beobachtungsraums des Abstandssensors 14 entsprechen.

Die Linsenanordnung besteht dabei vorzugsweise aus drei Linsen, die auf einer gekrümmten Linie angeordnet sind. Im Scheitelpunkt dieser Linie ist eine Linse angeordnet, welche eine Empfangskeule mit einem schmalen Öffnungswinkel für das zugehörige Empfangselement ausbildet. Diese Empfangskeule entspricht dabei dem mittleren Segment 18 des Beobachtungsraums des Abstandsensors 14, welches den der Einparkhilfeeinrichtung zugeordneten Erfassungsbereich bildet. Die benachbarten Linsen bilden Empfangskeulen mit einem größeren Öffnungswinkel aus, wobei diese Empfangskeulen sich vor der Linsenanordnung überschneiden können. Diese Empfangskeulen entsprechen dabei den weiteren Segmenten 16, 20 des Beobachtungsraums.

In dieser Ausführungsform ist der Abstandssensor 14 so ausgerichtet, dass die Mittellängsachse der dem mittleren Segment 18 des Beobachtungsraums zugeordnete Empfangskeule quer zur Längsachse des Fahrzeugs ausgerichtet ist.

In einer alternativen Ausführungsform der Erfindung wird ein Infrarot-Sensor eingesetzt, der eine Sendeeinrichtung aufweist, die mehrere Sendeelemente umfasst, bei denen es sich vorzugsweise ebenfalls um Laserdioden handelt.

Die Sendeelemente senden dabei Licht durch jeweils eine geeignet ausgebildete Linse in ein Segment 16, 18, 20 des Beobachtungsraums des Abstandssensors. Die Linsen sind dabei auf einer gekrümmten Linie angeordnet, wobei die Linse im Scheitelpunkt dieser Linie eine schmale Sendekeule des zugehörigen Sendeelements ausbildet, welche dem Segment 18 des Beobachtungsraums mit dem schmalen Öffnungswinkel, also dem zur Vermessung der Parklücke 4 vorgesehenen Erfassungsbereich, entspricht. Die weiteren Linsen bilden Sendekeulen mit größeren Öffnungswinkeln aus, welche den weiteren Segmenten 16, 20 des Beobachtungsraums des Abstandsensors 14 entsprechen. Bei Verwendung von Laserdioden, die Licht mit gleicher Intensität aussenden, hat die von der im Scheitelpunkt der Kurve befindlichen Linse ausgebildete Sendekeule aufgrund der stärkeren Fokussierung eine größere Reichweite als die von den anderen Linsen ausgebildeten Sendekeulen.

Die Ausrichtung des Abstandsensors 14 an dem Fahrzeug 2 erfolgt dabei in dieser Ausführungsform der Erfindung so, dass die Mittellängsachse der dem Segment 18 zugeordneten Sendekeule quer zur Längsachse des Fahrzeugs 2 ausgerichtet ist.

Die vorgesehenen Sendeelemente senden zeitlich versetzt Lichtpulse aus, wobei vorzugsweise aneinander anschließende Zyklen vorgesehen sind, in denen die Sendeelemente Lichtpulse in einer vorgegebenen Reihenfolge aussenden.

Die Empfangseinheit umfasst in dieser Ausführungsform der Erfindung ein einzelnes Empfangselement, welches beispielsweise wiederum als PIN-Diode ausgebildet ist. Das an einem Objekt in dem Beobachtungsraum reflektierte und in der Empfangseinheit erfasste Licht kann dabei anhand des Empfangszeitpunktes einem der Sendelemente bzw. einem der Segmente des Beobachtungsraums zugeordnet werden.

Dabei ist es insbesondere vorgesehen, dass ein erstes Sendeelement zu einem ersten Zeitpunkt einen Strahlungsimpuls ein zugehöriges erstes Segment 16, 18, 20 des Beobachtungsraums aussendet, und nach dem Ablauf eines Zeitintervalls ein zweites Sendeelement einen Strahlungspuls in ein ihm zugeordnetes Segment 16, 18, 20 des Beobachtungsraums aussendet. Während dieses Zeitintervalls in der Empfangseinheit empfangene reflektierte Strahlung wird dabei dem ersten Segment 16, 18, 20 des Beobachtungsraums zugeordnet. Entsprechend wird des Zeitintervalls zwischen dem Aussenden eines Strahlungspulses durch das zweite Sendeelement und dem Aussenden eines Strahlungspulses durch ein weiteres Sendeelement in der Empfangseinheit empfangene Strahlung dem zweiten Segment 16, 18, 20 des Beobachtungsraums zugeordnet usw.

Mittels des Abstandssensors 14 in der einen oder der anderen zuvor dargestellten Ausführungsform können Objekte in dem Beobachtunsraum erfasst und einem der Segmente 16, 18, 20 des Beobachtungsraums zugeordnet werden. Der Abstandssensor 14 verfügt dabei über eine Auswerteeinheit, die bei der Erfassung eines Objekts ein Erfassungssignal erzeugt, welches den Abstand des erfassten Objekts zu dem Abstandssensor angibt und dem Segment 16, 18, 20 zugeordnet ist, in dem das Objekt erfasst worden ist. Die Zuordnung kann dabei beispielsweise über entsprechende Ausgangskanäle der Auswerteeinheit erfolgen, wobei für jedes der Segmente 16, 18, 20 jeweils ein Ausgangskanal vorgesehen ist, über den Erfassungssignale bezüglich eines in dem Segment 16, 18, 20 erfassten Objekts der Einparkhilfeeinrichtung oder der Umfeldüberwachungseinrichtung zuführbar sind.

Die Einparkhilfeeinrichtung ruft dabei die Erfassungssignale von der Auswerteeinheit ab, die dem mittleren Segment 18 des Beobachtungsraums des Abstandssensors 14 zugeordnet sind, um die Größe und vorzugsweise auch die Lage der Parklücke 4 relativ zu dem Fahrzeug 2 zu ermitteln.

Die Vermessung der Parklücke 4 und die Bestimmung ihrer relativen Lage zu dem Fahrzeug 2 erfolgt dabei insbesondere durch eine Bestimmung des seitlichen Abstands zwischen dem Fahrzeug 2 und den die Parklücke begrenzenden Objekten bzw. Oberflächen während der Vorbeifahrt des Fahrzeugs 2 an der Parklücke 4. Bei der in der Figur 1 beispielhaft dargestellten Situation handelt es sich bei den die Parklücke 4 begrenzenden Objekten um die weiteren Fahrzeuge 6, 8 bzw. deren Fahrzeugseitenwände 10, 12.

Die Einparkhilfeeinrichtung wird dabei, beispielsweise manuell von dem Fahrer oder automatisch beim Einschalten eines Seitenblinkers während des Vorliegens einer kleinen Geschwindigkeit des Fahrzeugs 2, in einer bestimmten Ausgangsposition des Fahrzeugs 2 seitlich neben einem der weiteren Fahrzeuge 6, 8 aktiviert. Beispielhaft wird dabei hier davon ausgegangen, dass sich diese Position seitlich neben dem rechts in der Figur 1 angeordneten Fahrzeug 6 befindet.

Bei der Aktivierung wird ein ortsfestes Koordinatensystem festgelegt, dessen Ursprung in einem geeignet gewählten Aufpunkt des in der Ausgangsposition befindlichen Fahrzeugs 2 liegt. Bei dem Aufpunkt kann es sich dabei beispielsweise um den Hinterachsenmittelpunkt des Fahrzeugs handeln.

Bewegt sich das Fahrzeug ausgehend von dieser Ausgangsposition in Richtung der Parklücke, d.h. in der Figur 1 nach links, wird die jeweilige Position des Fahrzeugs 2 bzw. des gewählten Aufpunktes des Fahrzeugs 2 in dem Koordinatensystem ermittelt. Die Position des Fahrzeugs 2 wird dabei anhand von Signalen wenigstens eines Raddrehzahlsensors, aus denen die zurückgelegte Wegstrecke ermittelbar ist, sowie aus den Signalen eines Lenkwinkelsensors ermittelt, aus denen der Radeinschlagswinkel der lenkbaren Räder des Fahrzeugs und damit die Bewegungsrichtung des Fahrzeugs 2 bestimmbar ist.

Ferner wird während der Vorbeifahrt des Fahrzeugs 2 an der Parklücke 4 anhand der von der Auswerteeinheit des Abstandssensors 14 empfangenen Erfassungssignale der Abstand zu in Fahrzeugquerrichtung befindlichen Objekten bzw. Oberflächen, bestimmt. Aus dem Abstand und aus der bekannten Position des Abstandssensors 14 relativ zu dem gewählten Aufpunkt des Fahrzeugs 2 kann dann die Position der Objekte bzw. Oberflächen relativ zu dem Aufpunkt berechnet werden. Da ferner die jeweils aktuelle Position des Aufpunktes in dem ortsfesten Koordinatensystem bekannt ist, lässt sich somit auch die Position der Objekte bzw. Objektoberflächen in dem Koordinatensystem ermitteln.

Bei der in der Figur 1 beispielhaft dargestellten Situation passiert das Fahrzeug 2 bzw. der Abstandsensor 14 dabei die Parklücke 4 ausgehend von einer Ausgangsposition seitlich neben dem Fahrzeug 6. Dabei wird zunächst die Seitenwand 10 des Fahrzeugs 6 erfasst und deren Lage in dem Koordinatensystem in einem Speicher gespeichert. Dann wird die Ecke 22 des Fahrzeugs 6 bzw. deren Position erfasst, wobei die Ecke 22 insbesondere dadurch identifiziert wird, dass sich der mittels des Abstandssensors 14 ermittelte Abstand zu seitlich neben dem Fahrzeug befindlichen Objekten bzw. Oberflächen sprungartig vergrößert. Aufgrund des schmalen Öffnungswinkels des der Einparkhilfeeinrichtung zugeordneten Erfassungsbereichs ist die Position der Ecke 22 des Fahrzeugs 6 dabei mit einer hohen Genauigkeit ermittelbar.

In ähnlicher Weise wird dann - nachdem das Fahrzeug 2 und insbesondere der Abstandssensor 14 die Parklücke 4 passiert hat - die Ecke 24 des Fahrzeugs 8 bzw. deren Position erfasst, die dadurch identifiziert wird, dass sich der Abstand zwischen dem Fahrzeug 2 und den seitlich angeordneten Objekten bzw. Oberflächen sprunghaft verringert. Anschließend erfolgt die Erfassung der Seitenwand 12 des Fahrzeugs 8, bis die Vorbeifahrt an der Parklücke 4 in einer Endposition des Fahrzeugs 2 beendet wird, die beispielsweise seitlich neben dem Fahrzeug 8 liegt.

Anhand der gespeicherten Positionen der Fahrzeugseitenwände 10, 12 sowie insbesondere der Ecken 22, 24 kann dann die Lage und Größe der Parklücke 4 in dem Koordinatensystem bestimmt werden, wobei beispielsweise eine Gerade ermittelt wird, auf der die beiden Fahrzeugfronten 22, 24 liegen und die durch die Parklücke unterbrochen wird.

Zunächst kann damit die Länge der Parklücke berechnet und mit der Länge des Fahrzeugs 2 verglichen werden, um den Fahrer darüber zu informieren, ob das Fahrzeug 2 in die Parklücke 4 eingeparkt werden kann oder nicht.

Da ebenfalls die Position des Fahrzeugs 2 in dem ortsfesten Koordinatensystem berechnet wurde, kann darüber hinaus auch die Lage der Parklücke 4 relativ zu dem in der Endposition befindlichen Fahrzeug 2 bestimmt werden. Bei der Einparkhilfeeinrichtung kann daraus insbesondere eine Bahn berechnet werden, auf welcher das Fahrzeug 2 in die Parklücke 4 eingeparkt werden kann.

Anschließend kann das Fahrzeug 2 automatisch auf dieser Bahn in die Parklücke bewegt werden oder dem Fahrer können Lenkempfehlungen dafür gegeben werden, das Fahrzeug 2 auf der berechneten Bahn selbsttätig in die Parklücke 4 zu steuern.

Der ebenfalls in dem Fahrzeug 2 vorhandenen Umfeldüberwachungseinrichtung werden vorzugsweise alle in der Auswerteeinheit erzeugten Erfassungssignale zugeführt, so dass sie den gesamten Beobachtungsraum des Abstandssensors 14 auf das Vorhandensein von mit dem Fahrzeug 2 auf Kollisionskurs befindlichen Objekten überwachen kann.

In einer Ausführungsform der Erfindung umfasst eines der beiden neben dem mittleren Segment 18 angeordneten Segmente 16, 20 des Beobachtungsraums den toten Winkel des Fahrzeugs 2, so dass bei einem Spurwechsel oder bei einem Abbiegevorgang Fahrzeuge erfasst werden können, die sich in dem toten Winkel befinden und der Fahrer optisch oder akustisch gewarnt werden kann, falls das Vorhandensein eines weiteren Fahrzeugs im Bereich des toten Winkels ermittelt wird.

Eine derartige Überwachung des toten Winkels kann beispielsweise aktiviert werden, wenn ein Blinker des Fahrzeugs von dem Fahrer eingeschaltet wird, wobei für die Überwachung vorzugsweise der Abstandssensor 14 verwendet wird, welcher auf der Seite des Fahrzeugs 2 angeordnet ist, auf welcher der Blinker aktiviert wurde. Ferner kann als eine weitere Bedingung für eine derartige Überwachung auch vorgesehen sein, dass die Fahrzeuggeschwindigkeit einen vorgegebenen Schwellenwert überschreitet, so dass die Überwachung beispielsweise nur bei Spurwechseln auf einer Schnellstraße durchgeführt wird, auf der nur wenige sonstige Quellen für Störsignale vorhanden sind, die eine Fehlauslösung des Warnsignals verursachen könnten.

Darüber hinaus wird der Abstandssensor 14 auch als Pre-Crash-Sensor verwendet, wobei anhand der Erfassungssignale überprüft wird, ob sich Objekte im seitlichen Umfeld des Fahrzeugs, insbesondere im Nahbereich des Fahrzeugs 2 befinden, die auf das Fahrzeug 2 aufprallen werden, wobei eine Kollision mittels des Abstandssensors bereits frühzeitig erkannt werden kann.

Kurz vor der mittels der Erfassungssignale des Abstandssensors 14 ermittelten seitlichen Kollision zwischen dem Fahrzeug 2 und ein Objekt werden dann Insassenschutzmittel, wie insbesondere ein Seitenairbag des Fahrzeugs 2 aktiviert.

Ferner ist es auch möglich, mittels der Erfassungssignale zu ermitteln, ob sich ein weiter von dem Fahrzeug 2 entfernt befindliches Objekt in dem Beobachtungsraum auf einem Kollisionskurs mit dem Fahrzeug befindet. Aus wiederholten Abstandsmessungen kann dabei die Geschwindigkeit des Objekts ermittelt werden. Damit kann bestimmt werden, ob und mit welcher Geschwindigkeit sich das Objekt dem Fahrzeug 2 nähert. Durch die Zuordnung des Erfassungssignals zu einem der Segmente 16, 18, 20 des Beobachtungsraums kann gegebenenfalls zudem die Richtung ermittelt werden, aus der sich das Objekt dem Fahrzeug 2 nähert.

Diese Informationen können dabei dazu genutzt werden, um reversible Insassenschutzmittel, wie beispielsweise reversible Gurtstraffer oder eine Sitzpositionsverstellung, anzusteuern, wenn eine mögliche Kollision zwischen dem Fahrzeug und einem Objekt anhand der Erfassungssignale ermittelt wird. Zudem kann anhand der Erfassungssignale und insbesondere anhand der Richtung, aus der sich das Objekt dem Fahrzeug nähert, sowie anhand der Geschwindigkeit eine Abschätzung der Schwere der möglichen Kollision vorgenommen und die Auslösestufe der reversiblen Insassenschutzmittel entsprechend angepasst werden.

## Patentansprüche

1. Vorrichtung zum Erfassen eines seitlichen Umfelds eines Fahrzeugs mit einem seitlich an dem Fahrzeug angeordneten Abstandssensor (14), der eine Sendeeinheit zum Aussenden elektromagnetischer Strahlung in einen Beobachtungsraum und eine Empfangseinheit zum Empfangen von in dem Beobachtungsraum an einem Objekt reflektierter elektromagnetischer Strahlung aufweist, wobei mittels der Empfangseinheit bei einem Empfang reflektierter elektromagnetischer Strahlung Erfassungssignale erzeugbar sind,
wobei der Beobachtungsraum wenigstens zwei Erfassungsbereiche (18; 16, 18, 20) umfasst, wobei ein erster Erfassungsbereich (18) im Wesentlichen quer zur Fahrzeuglängsachse ausgerichtet ist und einen ersten Öffnungswinkel aufweist und wobei der zweite Erfassungsbereich (16, 18, 20) einen zweiten Öffnungswinkel aufweist, der größer als der erste Öffnungswinkel ist, dass dem ersten Erfassungsbereich (18) zugeordnete Erfassungssignale einer Einparkhilfeeinrichtung zuführbar sind, wobei mittels der Einparkhilfeeinrichtung bei einer Vorbeifahrt des Fahrzeugs (2) an einer Parklücke (4) die Parklücke (4) vermessbar ist, und dass dem zweiten Erfassungsbereich (16, 18, 20) zugeordnete Erfassungssignale einer
Umfeldüberwachungseinrichtung zuführbar sind,
wobei der zweite Erfassungsbereich einen toten Winkel des Fahrzeugs umfasst, **dadurch gekennzeichnet,**
**dass** der erste Erfassungsbereich ein erstes, mittleres Segment (18) des Beobachtungsraums umfasst und dass der zweite Erfassungsbereich das erste Segment (18) des Beobachtungsraums und zwei das erste Segment überlappende weitere Segmente (16; 20) des Beobachtungsraums umfasst, so dass der gesamte, sich aus dem ersten, mittleren Segment (18) und den beiden, das mittlere Segment (18) überlappenden weiteren Segmenten (16, 20) zusammensetzende Beobachtungsraum des Alstandssensor dem Erfassungsbereich entspricht, welcher der Umfeldüberwachungseinrichtung zugeordnet ist,
wobei der Umfeldüberwachungseinrichtung alle erzeugten Erfassungssignale zugeführt werden, so dass sie den gesamten Beobachtungsraum des Abstandssensors auf das Vorhandensein von mit dem Fahrzeug auf Kollisionskurs befindlichen Objekten überwachen kann,
wobei der Abstandssensor (14) über eine Auswerteeinheit verfügt, die bei der Erfassung eines Objekts ein Erfassungssignal erzeugt, welches den Abstand des erfassten Objekts zu dem Abstandssensor (14) angibt und dem Segment (16, 18, 20) zugeordnet ist, in dem das Objekt erfasst worden ist, wobei die Zuordnung über entsprechende Ausgangskanäle der Auswerteeinheit erfolgt, wobei für jedes der Segmente (16, 18, 20) jeweils ein Ausgangskanal vorgesehen ist, über den Erfassungssignale bezüglich eines in dem Segment (16, 18, 20) erfassten Objekts der Einparkhilfeeinrichtung oder der Umfeldüberwachungseinrichtung zuführbar sind,
wobei zur Ausbildung der drei Segmente (16, 18, 20) des Beobachtungsraums des Abstandssensors (14) drei entsprechend ausgebildete und angeordnete Linsen vorgesehen sind,
wobei im Fokussierpunkt jeder der drei Linsen jeweils ein Empfangselement angeordnet ist und ein in den gesamten Beobachtungsraum sendendes Sendeelement vorgesehen ist, oder
wobei jeder der drei Linsen jeweils ein Sendeelement zugeordnet ist und ein einzelnes Empfangselement vorgesehen ist.

2. Vorrichtung nach der ersten Ausgestaltung Anspruch 1,
**dadurch gekennzeichnet,**
**dass** die Empfangseinheit drei Fokussierpunkte aufweist, wobei in jedem Fokussierpunkt mittels jeweils einer Linse reflektierte elektromagnetische Strahlung fokussiert wird, die aus einem der Segmente (16; 18; 20) des Beobachtungsraums empfangen wird.

3. Vorrichtung nach Anspruch 2,
**dadurch gekennzeichnet,**
**dass** in jedem Fokussierpunkt ein Empfangselement angeordnet ist, mittels welchem Erfassungssignale erzeugbar sind, die dem Segment (16; 18; 20) des Beobachtungsraums zuordenbar sind, aus dem reflektierte Strahlung von dem Empfangselement erfassbar ist.

4. Vorrichtung nach der zweiten Ausgestaltung von Anspruch 1,
**dadurch gekennzeichnet,**
**dass** die Sendeelemente elektromagnetische Strahlungspulse zu vorgegebenen verschiedenen Zeitpunkten in jeweils ein Segment (16; 18; 20) des Beobachtungsraums aussenden.

5. Vorrichtung nach Anspruch 4,
**dadurch gekennzeichnet,**
**dass** die in der Empfangseinheit empfangene reflektierte Strahlung anhand eines Empfangszeitpunktes einem Segment (16; 18; 20) des Beobachtungsraums zuordenbar ist.

6. Vorrichtung nach einem der Ansprüche 4 oder 5,
**dadurch gekennzeichnet,**
**dass** reflektierte Strahlung, die innerhalb eines Zeitintervalls in der Empfangseinheit empfangen wird, das zu einem Zeitpunkt beginnt, zu dem ein Sendeelement Strahlung in ein Segment (16; 18; 20) des Beobachtungsraums aussendet, diesem Segment (16; 18; 20) des Beobachtungsraums zugeordnet wird.

7. Vorrichtung nach Anspruch 6,
**dadurch gekennzeichnet,**
**dass** das Zeitintervall zu einem Zeitpunkt endet, zu dem ein weiteres Sendeelement einen Strahlungspuls in ein Segment (16; 18; 20) des Beobachtungsraums aussendet.

8. Vorrichtung nach einem der vorangegangenen Ansprüche,
**dadurch gekennzeichnet,**
**dass** die Umfeldüberwachungseinrichtung überprüft, ob sich ein in dem zweiten Erfassungsbereich befindliches Objekt auf einem Kollisionskurs mit dem Fahrzeug befindet und wenigstens ein Insassenschutzmittel ansteuert, wenn festgestellt wird, dass sich ein Objekt auf einem Kollisionskurs mit dem Fahrzeug befindet.

9. Vorrichtung nach Anspruch 8,
**dadurch gekennzeichnet,**
**dass** die Umfeldüberwachungseinrichtung einen Seitenairbag aktiviert, wenn festgestellt wird, dass sich ein Objekt auf einem Kollisionskurs mit dem Fahrzeug befindet.

10. Vorrichtung nach Anspruch 8,
**dadurch gekennzeichnet,**
**dass** die Umfeldüberwachungseinrichtung ein reversibles Insassenschutzmittel aktiviert, wenn festgestellt wird, dass sich ein Objekt auf einem Kollisionskurs mit dem Fahrzeug befindet.

11. Vorrichtung nach einem der vorangegangenen Ansprüche,
**dadurch gekennzeichnet,**
**dass** die Überwachungseinrichtung ein Warnsignal auslöst, wenn ein Objekt innerhalb des toten Winkels des Fahrzeugs erfasst wird.

12. Vorrichtung nach einem der vorangegangenen Ansprüche,
**dadurch gekennzeichnet,**
**dass** aus den Erfassungssignalen ein Abstand zwischen dem Fahrzeug (2) und einem seitlich von dem Fahrzeug (2) befindlichen Objekt (6; 8) ermittelbar ist und dass in der Einparkhilfeeinrichtung eine Parklückenbegrenzung (22; 24) anhand einer Veränderung des Abstands zwischen dem Fahrzeug und seitlich von dem Fahrzeug (2) befindlichen Objekten (6; 8) ermittelbar ist.

13. Vorrichtung nach einem der vorangegangenen Ansprüche,
**dadurch gekennzeichnet,**
**dass** in der Einparkhilfeeinrichtung ein bei der Vorbeifahrt von dem Fahrzeug (2) seitlich passierter Bereich als Parklücke (4) identifizierbar ist, in dem der Abstand zwischen dem Fahrzeug (2) und seitlich von dem Fahrzeug (2) befindlichen Objekten (6; 8) größer ist als in einem weiteren Bereich.

## Claims

1. A device for covering a lateral region of the surroundings of a vehicle with a distance sensor (14), said distance sensor (14) being laterally arranged on the vehicle and having an emitting unit for emitting electromagnetic radiation into an observed space and a receiving unit for receiving electromagnetic radiation reflected by an object in the observed space, wherein detection signals can be generated by means of the receiving unit when reflected electromagnetic radiation has been received,
wherein the observed space comprises at least two covering ranges (18; 16, 18, 20), wherein a first covering range (18) is oriented essentially transversely to the longitudinal axis of the vehicle and has a first apex angle and wherein the second covering range (16, 18, 20) has a second apex angle that is greater than the first apex angle, that detection signals assigned to the first covering range (18) can be supplied to a parking assistance device, wherein a parking space (4) can be measured by means of the parking assistance device when the vehicle (2) drives past the parking space (4), and that detection signals assigned to the second covering range (16, 18, 20) can be supplied to a surroundings monitoring device, wherein the second covering range comprises a blind spot of the vehicle,
**characterized in**
**that** the first covering range comprises a first, central segment (18) of the observed space and that the second covering range comprises the first segment (18) of the observed space and two further segments (16; 20) of the observed space overlapping the first segment so that the entire observed space of the distance sensor composed of the first, central segment (18) and the two further segments (16, 20) overlapping the central segment (18) corresponds to the covering range that is assigned to the surroundings monitoring device,
wherein all generated detection signals are supplied to the surroundings monitoring device so that it can monitor the entire observed space of the distance sensor for the presence of objects that are on a collision course with the vehicle,
wherein the distance sensor (14) has an evaluation unit that generates a detection signal when an object has been detected, which detection signal indicates the distance between the detected object and the distance sensor (14) and is assigned to that segment (16, 18, 20) in which the object has been detected, wherein said assignment is performed through corresponding output channels of the evaluation unit, wherein one output channel each is provided for each of the segments (16, 18, 20), through which output channel detection signals regarding an object detected in the segment (16, 18, 20) can be supplied to the parking assistance device or to the surroundings monitoring device,
wherein for forming the three segments (16, 18, 20) of the observed space of the distance sensor (14), three correspondingly formed and arranged lenses are provided,
wherein one receiving element each is arranged in the focusing point of each of the three lenses and one emitting element emitting into the entire observed space is provided, or
wherein one emitting element each is assigned to each of the three lenses and a single receiving element is provided.

2. A device according to the first realization of claim 1,
**characterized in**
**that** the receiving unit has three focusing points, wherein reflected electromagnetic radiation is focused in each focusing point by means of one lens each, which reflected electromagnetic radiation is received from one of the segments (16; 18; 20) of the observed space.

3. A device according to claim 2,
**characterized in**
**that** one receiving element is arranged in each focusing point, by means of which receiving element detection signals can be generated that can be assigned to that segment (16; 18; 20) of the observed space from which reflected radiation can be detected by the receiving element.

4. A device according to the second realization of claim 1,
**characterized in**
**that** the emitting elements emit electromagnetic radiation pulses at predetermined different instants into one segment (16; 18; 20) of the observed space a time.

5. A device according to claim 4,
**characterized in**
**that** the reflected radiation received in the receiving unit can be assigned to a segment (16; 18; 20) of the observed space on the basis of an instant of reception.

6. A device according to any one of claims 4 or 5,
**characterized in**
**that** reflected radiation received in the receiving unit within a period that starts at an instant at which an emitting element emits radiation into a segment (16; 18; 20) of the observed space is assigned to this segment (16; 18; 20) of the observed space.

7. A device according to claim 6,
**characterized in**
**that** the period ends at an instant at which a further emitting element emits a radiation pulse into a segment (16; 18; 20) of the observed space.

8. A device according to any one of the preceding claims,
**characterized in**
**that** the surroundings monitoring device checks whether an object that is present in the second covering range is on a collision course with the vehicle and triggers at least one passenger protection means if an object is determined to be on a collision course with the vehicle.

9. A device according to claim 8,
**characterized in**
**that** the surroundings monitoring device activates a lateral airbag if an object is determined to be on a collision course with the vehicle.

10. A device according to claim 8,
**characterized in**
**that** the surroundings monitoring device activates a reversible passenger protection means if an object is determined to be on a collision course with the vehicle.

11. A device according to any one of the preceding claims,
**characterized in**
**that** the monitoring device triggers a warning signal if an object is detected in the blind spot of the vehicle.

12. A device according to any one of the preceding claims,
**characterized in**
**that** a distance between the vehicle (2) and an object (6; 8) that is located at the side of the vehicle (2) can be determined from the detection signals and that a parking space boundary (22; 24) can be determined in the parking assistance device on the basis of a change of the distance between the vehicle and objects (6; 8) that are located at the side of the vehicle (2).

13. A device according to any one of the preceding claims,
**characterized in**
**that** a region that is laterally passed by the vehicle (2) driving past it and in which the distance between the vehicle (2) and objects (6; 8) that are located at the side of the vehicle (2) is greater than in a further region can be identified as a parking space (4) in the parking assistance device.

## Revendications

1. Dispositif de détection d'un champ environnant latéral d'un véhicule avec un détecteur d'intervalle (14) qui est disposé latéralement sur le véhicule et qui présente une unité d'émission pour l'émission d'un rayonnement électromagnétique dans un espace d'observation et une unité de réception pour la réception d'un rayonnement électromagnétique réfléchi sur un objet dans l'espace d'observation, des signaux de détection pouvant être produits au moyen de l'unité de réception lors d'une réception du rayonnement électromagnétique réfléchi,
l'espace d'observation comprenant au moins deux zones de détection (18 ; 16, 18, 20), une première zone de détection (18) étant orientée essentiellement transversalement à l'axe longitudinal du véhicule et présentant un premier angle d'ouverture, et la deuxième zone de détection (16, 18, 20) présentant un deuxième angle d'ouverture qui est plus grand que le premier angle d'ouverture, en ce que des signaux de détection affectés à la première zone de détection (18) peuvent être acheminés vers un équipement d'aide au stationnement (18), l'équipement d'aide au stationnement permettant de mesurer le créneau (4) lorsque le véhicule (2) passe devant un créneau (4), et en ce que des signaux de détection affectés à la deuxième zone de détection (16, 18, 20) peuvent être acheminés vers un équipement de surveillance d'environnement, la deuxième zone de détection comprenant un angle mort du véhicule,
**caractérisé en ce que**
la première zone de détection comprend un premier segment (18) médian de l'espace d'observation, et **en ce que** la deuxième zone de détection comprend le premier segment (18) de l'espace d'observation et deux autres segments (16 ; 20) de l'espace d'observation chevauchant le premier segment de sorte que la totalité de l'espace d'observation du détecteur d'intervalle, se composant du premier segment (18) médian et des deux autres segments (16, 20) chevauchant le segment (18) médian, correspond à la zone de détection qui est affectée à l'équipement de surveillance d'environnement, tous les signaux de détection produits étant acheminés vers l'équipement de surveillance d'environnement de sorte qu'il peut surveiller la totalité de l'espace d'observation du détecteur d'intervalle à la recherche d'objets situés sur la trajectoire de collision avec le véhicule,
le détecteur d'intervalle (14) disposant d'une unité d'analyse qui, lors de la détection d'un objet, produit un signal de détection qui indique l'intervalle entre l'objet détecté et le détecteur d'intervalle (14) et qui est affecté au segment (16, 18, 20) dans lequel l'objet a été détecté, l'affectation s'effectuant par le biais de canaux de sortie correspondants de l'unité d'analyse, un canal de sortie étant respectivement prévu pour chacun des segments (16, 18, 20), canal par le biais duquel des signaux de détection concernant un objet détecté dans le segment (16, 18, 20) peuvent être acheminés vers l'équipement d'aide au stationnement ou vers l'équipement de surveillance d'environnement, trois lentilles constituées et affectées en conséquence étant prévues pour la constitution des trois segments (16, 18, 20) de l'espace d'observation du détecteur d'intervalle (14),
un élément de réception étant respectivement disposé au point de focalisation des trois lentilles, et un élément d'émission qui émet dans la totalité de l'espace d'observation étant prévu, ou
un élément d'émission étant respectivement affecté à chacune des trois lentilles, et un élément de réception unique étant prévu.

2. Dispositif selon la première configuration de la revendication 1,
**caractérisé en ce que**
l'unité de réception présente trois points de focalisation, un rayonnement électromagnétique réfléchi qui est reçu à partir d'un des segments (16 ; 18 ; 20) de l'espace d'observation étant focalisé dans chaque point de focalisation au moyen de respectivement une lentille.

3. Dispositif selon la revendication 2,
**caractérisé en ce que**,
dans chaque point de focalisation, il est disposé un élément de réception au moyen duquel des signaux de détection peuvent être produits et peuvent être affectés au segment (16 ; 18 ; 20) de l'espace d'observation à partir duquel un rayonnement réfléchi peut être détecté par l'élément de réception.

4. Dispositif selon la deuxième configuration de la revendication 1,
**caractérisé en ce que**
les éléments d'émission émettent des impulsions de rayonnement électromagnétiques à différents instants prédéfinis dans respectivement un segment (16 ; 18 ; 20) de l'espace d'observation.

5. Dispositif selon la revendication 4,
**caractérisé en ce que**
le rayonnement réfléchi reçu dans l'unité de réception peut être affecté à un segment (16 ; 18 ; 20) de l'espace d'observation à l'aide d'un instant de réception.

6. Dispositif selon une des revendications 4 ou 5,
**caractérisé en ce que**
le rayonnement électromagnétique, qui est reçu à l'intérieur d'un intervalle de temps dans l'unité de réception qui commence à un instant où un élément d'émission émet un rayonnement dans un segment (16 ; 18 ; 20) de l'espace d'observation, est affecté à ce segment (16 ; 18 ; 20) de l'espace d'observation.

7. Dispositif selon la revendication 6,
**caractérisé en ce que**
l'intervalle de temps se termine à un instant où un autre élément d'émission émet une impulsion de rayonnement dans un segment (16 ; 18 ; 20) de l'espace d'observation.

8. Dispositif selon une des revendications précédentes,
**caractérisé en ce que**
l'équipement de surveillance d'environnement vérifie si un objet situé dans la deuxième zone de détection se trouve sur une trajectoire de collision avec le véhicule et pilote au moins un moyen de protection des occupants s'il est constaté qu'un objet se trouve sur une trajectoire de collision avec le véhicule.

9. Dispositif selon la revendication 8,
**caractérisé en ce que**
l'équipement de surveillance d'environnement active un airbag latéral s'il est constaté qu'un objet se trouve sur une trajectoire de collision avec le véhicule.

10. Dispositif selon la revendication 8,
**caractérisé en ce que**
l'équipement de surveillance d'environnement active un moyen de protection des occupants réversible s'il est constaté qu'un objet se trouve sur une trajectoire de collision avec le véhicule.

11. Dispositif selon une des revendications précédentes,
**caractérisé en ce que**
l'équipement de surveillance déclenche un signal d'alarme si un objet est détecté à l'intérieur de l'angle mort du véhicule.

12. Dispositif selon une des revendications précédentes,
**caractérisé en ce que**,
à partir des signaux de détection, il est possible de déterminer un intervalle entre le véhicule (2) et un objet (6 ; 8) situé latéralement par rapport au véhicule (2), et **en ce que**, dans l'équipement d'aide au stationnement, il est possible de déterminer une limitation du créneau (22 ; 24) à l'aide d'une variation de l'intervalle entre le véhicule et des objets (6 ; 8) situés latéralement par rapport au véhicule (2).

13. Dispositif selon une des revendications précédentes,
**caractérisé en ce que**,
dans l'équipement d'aide au stationnement, une zone qui est passée latéralement lors du passage du véhicule (2) peut être identifiée en tant que créneau (4), zone dans laquelle l'intervalle entre le véhicule (2) et des objets (6 ; 8) situés latéralement par rapport au véhicule (2) est plus grand que dans une autre zone.
